# EUROPEAN PATENT SPECIFICATION

(11) **EP 4 186 174 B1**
(45) Date of publication and mention of the grant of the patent: **17.12.2025**
(21) Application number: 21748679.4
(22) Date of filing: 22.07.2021
(51) Int. Cl.: H04B 7/06, H04L 5/00

(54) **MULTIPLE SIDELINK REFERENCE SIGNALS**
MEHRFACH-SIDELINK-REFERENZSIGNALE
SIGNAUX DE RÉFÉRENCE DE LIAISON LATÉRALE MULTIPLES

(30) Priority: 22.07.2020 US 202063055180 P
(43) Date of publication of application: 31.05.2023
(73) Proprietor: Lenovo (Singapore) Pte. Ltd., New Tech Park 556741 (SG)
(72) Inventor: GANESAN, Karthikeyan, 64569 Nauheim (DE); BHAMRI, Ankit, 63322 Rödermark (DE); NANGIA, Vijay, Woodridge, Illinois 60517 (US); THOMAS, Robin, 60489 Frankfurt am Main (DE)
(74) Representative: Openshaw & Co.
(86) International application number: PCT/IB2021/056653
(87) International publication number: WO 2022/018688

(56) References cited:
- WO-A1-2020/033086
- AT&T: "Physical layer procedures for NR sidelink design", vol. RAN WG1, no. Athens, Greece; 20190225 - 20190301, 16 February 2019 (2019-02-16), XP051599590, Retrieved from the Internet <URL:http://www.3gpp.org/ftp/tsg%5Fran/WG1%5FRL1/TSGR1%5F96/Docs/R1%2D1901896%2Ezip> [retrieved on 20190216]
- HUAWEI ET AL: "Sidelink discovery for NR V2X", vol. RAN WG1, no. Spokane, USA; 20181112 - 20181116, 11 November 2018 (2018-11-11), XP051555606, Retrieved from the Internet <URL:http://www.3gpp.org/ftp/Meetings%5F3GPP%5FSYNC/RAN1/Docs/R1%2D1813551%2Ezip> [retrieved on 20181111]

## Description

### CROSS-REFERENCE TO RELATED APPLICATIONS

This application claims priority to United States Patent Application Serial Number 63/055,180 entitled "APPARATUSES, METHODS, AND SYSTEMS FOR SL BEAMFORMING OPERATION FOR GROUPCAST AND UNICAST TRANSMISSION" and filed on July 22, 2020 for Karthikeyan Ganesan.

### FIELD

The subject matter disclosed herein relates generally to wireless communications and more particularly relates to multiple sidelink reference signals. There is described herein a transmitter user equipment for sidelink communication.

### BACKGROUND

In certain wireless communications networks, sidelink communications may be configured using sidelink control information. The sidelink control information may be transmitted in one or more messages.

WO 2020/033086 A1 describes a step of providing a sidelink (SL) synchronization signal (SS) burst over a time period, the SL SS burst including a slot including OFDM symbols. D1 also describes a user equipment transmitting to a gNB, via plural symbols after the first symbol, a synchronization signal block (SSB) over RBs in a new radio (NR) SL SS and physical broadcast channel (PBCH) (NR SL SS/PBCH).

R1-1901896 is a 3GPP discussion document titled "Physical layer procedures for NR sidelink design" submitted by AT&T at TSG RAN WG1 #96 in Athens, Greece, on 25th February 2019 and suggests that in order to let other UEs knows the existence of a transmitting node (Node-T), a local manager may trigger the Node-T to transmit A-DRS to be received by surrounding UEs.

R1-1813551 is a 3GPP discussion document titled "Sidelink discovery for NR V2X" submitted by Huawei & HiSilicon at TSG RAN WG1 Meeting #95 in Spokane, USA, on 12 November 2018 and describes a sidelink discovery message and procedure and a physical sidelink discovery channel (PSDCH) for NR V2X.

### BRIEF SUMMARY

The invention is defined by the appended claims. Claim 1 defines a transmitter user equipment for sidelink communication. In the following, any method and/or apparatus referred to as embodiments but nevertheless do not fall within the scope of the appended claims are to be understood as examples helpful in understanding the invention.

Methods for multiple sidelink reference signals are disclosed. Apparatuses and systems also perform the functions of the methods. One embodiment of a method includes transmitting, from a transmitter user equipment to a receiver user equipment, information indicating a plurality of reference signals. The information further indicates a plurality of beams, a plurality of panels, or a combination thereof transmitting first layer control signaling indicating target user information, resource configuration of a reference signal for receiver decoding or transmitting using a default reference signal configuration, and a time slot offset and time frequency resource for beam measurement feedback reporting for a set of user equipment devices as part of initial beam acquisition. Transmitting the information indicating the plurality of reference signals includes determining to transmit: the plurality of reference signals as part of the initial beam acquisition together with a higher layer discovery request message; the plurality of reference signals prior to higher layer signaling; or a combination thereof. The receiver user equipment determines the target user information, and generates and transmits: a beam measurement feedback using a beam correspondence; or a reference signal indicating the plurality of beams, the plurality of panels, or the combination thereof in the time slot offset if not supporting beam correspondence.

One apparatus for multiple sidelink reference signals includes a transmitter that transmits, from a transmitter user equipment to a receiver user equipment, information indicating a plurality of reference signals. The information further indicates a plurality of beams, a plurality of panels, or a combination thereof transmitting first layer control signaling indicating target user information, resource configuration of a reference signal for receiver decoding or transmitting using a default reference signal configuration, and a time slot offset and time frequency resource for beam measurement feedback reporting for a set of user equipment devices as part of initial beam acquisition. Transmitting the information indicating the plurality of reference signals includes determining to transmit: the plurality of reference signals as part of the initial beam acquisition together with a higher layer discovery request message; the plurality of reference signals prior to higher layer signaling; or a combination thereof. The receiver user equipment determines the target user information, and generates and transmits: a beam measurement feedback using a beam correspondence; or a reference signal indicating the plurality of beams, the plurality of panels, or the combination thereof in the time slot offset if not supporting beam correspondence.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for multiple sidelink reference signals;
Figure 2 is a schematic block diagram illustrating one embodiment of an apparatus that may be used for multiple sidelink reference signals;
Figure 3 is a schematic block diagram illustrating one embodiment of an apparatus that may be used for multiple sidelink reference signals;
Figure 4 is a schematic block diagram illustrating one embodiment of a system having standalone SL CSI-RS transmission prior to the transmission of a discovery request message in PC5 RRC;
Figure 5 is a schematic block diagram illustrating one embodiment of a system for SL CSI-RS transmitted together with a discovery request message in PC5 RRC;
Figure 6 is a schematic block diagram illustrating one embodiment of beamforming for broadcast transmission;
Figure 7A is a schematic block diagram illustrating one embodiment of a first option for beamforming for groupcast transmission;
Figure 7B is a schematic block diagram illustrating one embodiment of a second option for beamforming for groupcast transmission;
Figure 8 is a schematic block diagram illustrating one embodiment of beamforming for unicast transmission;
Figure 9 is a schematic block diagram illustrating one embodiment of FDM of PSCCH and PSSCH; and
Figure 10 is a flow chart diagram illustrating one embodiment of a method for multiple sidelink reference signals.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Certain of the functional units described in this specification may be labeled as modules, in order to more particularly emphasize their implementation independence. For example, a module may be implemented as a hardware circuit comprising custom very-large-scale integration ("VLSI") circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but may include disparate instructions stored in different locations which, when joined logically together, include the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be any number of lines and may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. The code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

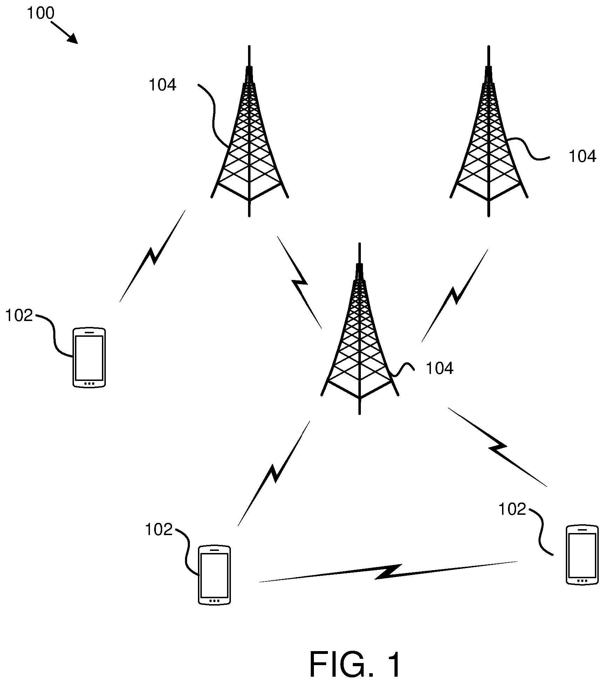

Figure 1 depicts an embodiment of a wireless communication system 100 for multiple sidelink reference signals. In one embodiment, the wireless communication system 100 includes remote units 102 and network units 104. Even though a specific number of remote units 102 and network units 104 are depicted in Figure 1, one of skill in the art will recognize that any number of remote units 102 and network units 104 may be included in the wireless communication system 100.

In one embodiment, the remote units 102 may include computing devices, such as desktop computers, laptop computers, personal digital assistants ("PDAs"), tablet computers, smart phones, smart televisions (e.g., televisions connected to the Internet), set-top boxes, game consoles, security systems (including security cameras), vehicle on-board computers, network devices (e.g., routers, switches, modems), aerial vehicles, drones, or the like. In some embodiments, the remote units 102 include wearable devices, such as smart watches, fitness bands, optical head-mounted displays, or the like. Moreover, the remote units 102 may be referred to as subscriber units, mobiles, mobile stations, users, terminals, mobile terminals, fixed terminals, subscriber stations, UE, user terminals, a device, or by other terminology used in the art. The remote units 102 may communicate directly with one or more of the network units 104 via UL communication signals. In certain embodiments, the remote units 102 may communicate directly with other remote units 102 via sidelink communication.

The network units 104 may be distributed over a geographic region. In certain embodiments, a network unit 104 may also be referred to and/or may include one or more of an access point, an access terminal, a base, a base station, a location server, a core network ("CN"), a radio network entity, a Node-B, an evolved node-B ("eNB"), a 5G node-B ("gNB"), a Home Node-B, a relay node, a device, a core network, an aerial server, a radio access node, an access point ("AP"), new radio ("NR"), a network entity, an access and mobility management function ("AMF"), a unified data management ("UDM"), a unified data repository ("UDR"), a UDM/UDR, a policy control function ("PCF"), a radio access network ("RAN"), a network slice selection function ("NSSF"), an operations, administration, and management ("OAM"), a session management function ("SMF"), a user plane function ("UPF"), an application function, an authentication server function ("AUSF"), security anchor functionality ("SEAF"), trusted non-3GPP gateway function ("TNGF"), or by any other terminology used in the art. The network units 104 are generally part of a radio access network that includes one or more controllers communicably coupled to one or more corresponding network units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the art.

In one implementation, the wireless communication system 100 is compliant with NR protocols standardized in third generation partnership project ("3GPP"), wherein the network unit 104 transmits using an OFDM modulation scheme on the downlink ("DL") and the remote units 102 transmit on the uplink ("UL") using a single-carrier frequency division multiple access ("SC-FDMA") scheme or an orthogonal frequency division multiplexing ("OFDM") scheme. More generally, however, the wireless communication system 100 may implement some other open or proprietary communication protocol, for example, WiMAX, institute of electrical and electronics engineers ("IEEE") 802.11 variants, global system for mobile communications ("GSM"), general packet radio service ("GPRS"), universal mobile telecommunications system ("UMTS"), long term evolution ("LTE") variants, code division multiple access 2000 ("CDMA2000"), Bluetooth^{®}, ZigBee, Sigfoxx, among other protocols. The present disclosure is not intended to be limited to the implementation of any particular wireless communication system architecture or protocol.

The network units 104 may serve a number of remote units 102 within a serving area, for example, a cell or a cell sector via a wireless communication link. The network units 104 transmit DL communication signals to serve the remote units 102 in the time, frequency, and/or spatial domain.

In various embodiments, a remote unit 102 may transmit, from a transmitter user equipment to a receiver user equipment, information indicating a plurality of reference signals. The information further indicates a plurality of beams, a plurality of panels, or a combination thereof transmitting first layer control signaling indicating target user information, resource configuration of a reference signal for receiver decoding or transmitting using a default reference signal configuration, and a time slot offset and time frequency resource for beam measurement feedback reporting for a set of user equipment devices as part of initial beam acquisition. Transmitting the information indicating the plurality of reference signals includes determining to transmit: the plurality of reference signals as part of the initial beam acquisition together with a higher layer discovery request message; the plurality of reference signals prior to higher layer signaling; or a combination thereof. The receiver user equipment determines the target user information, and generates and transmits: a beam measurement feedback using a beam correspondence; or a reference signal indicating the plurality of beams, the plurality of panels, or the combination thereof in the time slot offset if not supporting beam correspondence. Accordingly, the remote unit 102 may be used for multiple sidelink reference signals.

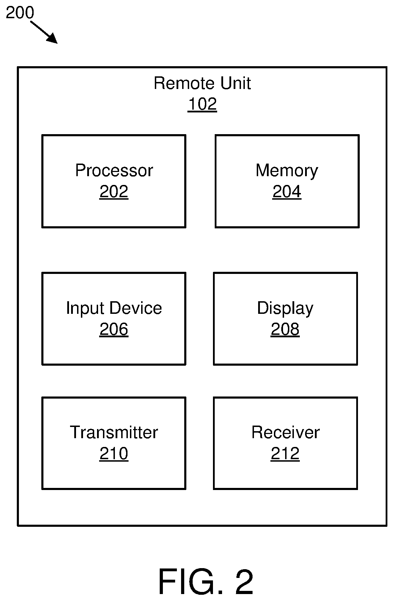

Figure 2 depicts one embodiment of an apparatus 200 that may be used for multiple sidelink reference signals. The apparatus 200 includes one embodiment of the remote unit 102. Furthermore, the remote unit 102 may include a processor 202, a memory 204, an input device 206, a display 208, a transmitter 210, and a receiver 212. In some embodiments, the input device 206 and the display 208 are combined into a single device, such as a touchscreen. In certain embodiments, the remote unit 102 may not include any input device 206 and/or display 208. In various embodiments, the remote unit 102 may include one or more of the processor 202, the memory 204, the transmitter 210, and the receiver 212, and may not include the input device 206 and/or the display 208.

The processor 202, in one embodiment, may include any known controller capable of executing computer-readable instructions and/or capable of performing logical operations. For example, the processor 202 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 202 executes instructions stored in the memory 204 to perform the methods and routines described herein. The processor 202 is communicatively coupled to the memory 204, the input device 206, the display 208, the transmitter 210, and the receiver 212.

The memory 204, in one embodiment, is a computer readable storage medium. In some embodiments, the memory 204 includes volatile computer storage media. For example, the memory 204 may include a RAM, including dynamic RAM ("DRAM"), synchronous dynamic RAM ("SDRAM"), and/or static RAM ("SRAM"). In some embodiments, the memory 204 includes non-volatile computer storage media. For example, the memory 204 may include a hard disk drive, a flash memory, or any other suitable non-volatile computer storage device. In some embodiments, the memory 204 includes both volatile and non-volatile computer storage media. In some embodiments, the memory 204 also stores program code and related data, such as an operating system or other controller algorithms operating on the remote unit 102.

The input device 206, in one embodiment, may include any known computer input device including a touch panel, a button, a keyboard, a stylus, a microphone, or the like. In some embodiments, the input device 206 may be integrated with the display 208, for example, as a touchscreen or similar touch-sensitive display. In some embodiments, the input device 206 includes a touchscreen such that text may be input using a virtual keyboard displayed on the touchscreen and/or by handwriting on the touchscreen. In some embodiments, the input device 206 includes two or more different devices, such as a keyboard and a touch panel.

The display 208, in one embodiment, may include any known electronically controllable display or display device. The display 208 may be designed to output visual, audible, and/or haptic signals. In some embodiments, the display 208 includes an electronic display capable of outputting visual data to a user. For example, the display 208 may include, but is not limited to, a liquid crystal display ("LCD"), a light emitting diode ("LED") display, an organic light emitting diode ("OLED") display, a projector, or similar display device capable of outputting images, text, or the like to a user. As another, non-limiting, example, the display 208 may include a wearable display such as a smart watch, smart glasses, a heads-up display, or the like. Further, the display 208 may be a component of a smart phone, a personal digital assistant, a television, a table computer, a notebook (laptop) computer, a personal computer, a vehicle dashboard, or the like.

In certain embodiments, the display 208 includes one or more speakers for producing sound. For example, the display 208 may produce an audible alert or notification (e.g., a beep or chime). In some embodiments, the display 208 includes one or more haptic devices for producing vibrations, motion, or other haptic feedback. In some embodiments, all or portions of the display 208 may be integrated with the input device 206. For example, the input device 206 and display 208 may form a touchscreen or similar touch-sensitive display. In other embodiments, the display 208 may be located near the input device 206.

In certain embodiments, the transmitter 210 transmits, from a transmitter user equipment to a receiver user equipment, information indicating a plurality of reference signals. The information further indicates a plurality of beams, a plurality of panels, or a combination thereof transmitting first layer control signaling indicating target user information, resource configuration of a reference signal for receiver decoding or transmitting using a default reference signal configuration, and a time slot offset and time frequency resource for beam measurement feedback reporting for a set of user equipment devices as part of initial beam acquisition. Transmitting the information indicating the plurality of reference signals includes determining to transmit: the plurality of reference signals as part of the initial beam acquisition together with a higher layer discovery request message; the plurality of reference signals prior to higher layer signaling; or a combination thereof. The receiver user equipment determines the target user information, and generates and transmits: a beam measurement feedback using a beam correspondence; or a reference signal indicating the plurality of beams, the plurality of panels, or the combination thereof in the time slot offset if not supporting beam correspondence.

Although only one transmitter 210 and one receiver 212 are illustrated, the remote unit 102 may have any suitable number of transmitters 210 and receivers 212. The transmitter 210 and the receiver 212 may be any suitable type of transmitters and receivers. In one embodiment, the transmitter 210 and the receiver 212 may be part of a transceiver.

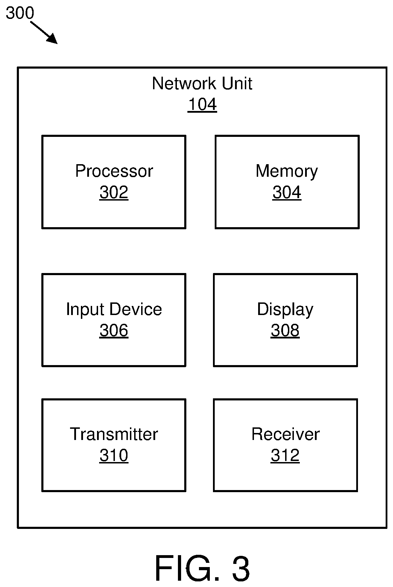

Figure 3 depicts one embodiment of an apparatus 300 that may be used for multiple sidelink reference signals. The apparatus 300 includes one embodiment of the network unit 104. Furthermore, the network unit 104 may include a processor 302, a memory 304, an input device 306, a display 308, a transmitter 310, and a receiver 312. As may be appreciated, the processor 302, the memory 304, the input device 306, the display 308, the transmitter 310, and the receiver 312 may be substantially similar to the processor 202, the memory 204, the input device 206, the display 208, the transmitter 210, and the receiver 212 of the remote unit 102, respectively.

In certain embodiments, there may be beam establishment and best beam feedback reception for unicast with channel state information ("CSI") reference signal ("RS") ("CSI-RS") transmission, beamforming for the transmission of 1st sidelink control information ("SCI"), 2nd SCI and a physical sidelink shared channel ("PSSCH"), configuration of sidelink dedicated transmission configuration indicator ("TCI") table for unicast, TCI and/or cast type state indication in SCI for receiving 2nd SCI and PSSCH and a beamforming aspect for physical sidelink feedback channel ("PSFCH") transmission.

In some embodiments, such as in new radio ("NR") vehicle to everything ("V2X") mm wave frequencies (e.g., frequency range 2 ("FR2"), frequency range 3 ("FR3"), and/or frequency range 4 ("FR4")), there may be challenges like sidelink beam and/or panel establishment for unicast transmission between a transmit ("TX") user equipment ("UE") and a receiver ("RX") UE, beam and/or panel switching based on the measurement for unicast transmission, sidelink beam recovery. In various embodiments, such as in NR UE to network ("Uu") interfaces ("NR-Uu"), there may be standardized synchronization signal block ("SSB") random access channel ("RACH") ("SSB-RACH") correspondence for initial beam alignment. In certain embodiments, such as in NR UE to UE interfaces ("PC5"), not all UEs transmit a sidelink ("SL") SSB ("SL-SSB") transmission. In some embodiments, such as in V2X, a sidelink synchronization signal ("SLSS") is only transmitted by a synchronization reference ("SyncRef") UE to provide synchronization sources to all nearby UEs (e.g., so not all UEs transmit SLSS). In various embodiments, a unicast session may be established with UEs that are not transmitting SLSS.

As used herein, the term eNB and/or gNB may be used for a base station, but may be replaced by other radio access nodes (e.g., base station ("BS"), eNB, gNB, access point ("AP"), NR, and so forth). Moreover, while embodiments herein may be described in the context of 5G NR, they may be equally applicable to other mobile communication systems supporting serving cells and/or carriers configured for sidelink communication over a PC5 interface.

In certain embodiments described herein, a first UE ("UE-1") and/or ("UE1") may be referred to as a TX UE and a second UE ("UE-2") and/or ("UE2") may be referred to as a RX UE.

In a first embodiment, there may be ways to establish a unicast sidelink beam, establish a CSI-RS resource configuration, and/or provide feedback on the beam.

In the first embodiment, a TX UE may transmit a configured and/or preconfigured SL CSI-RS or any SL RS to initiate SL beam establishment or acquisition prior to the transmission of a higher layer direct communication request message.

In one example, a UE may initiate SL beam establishment or acquisition (e.g., in a frequency range above 6 GHz (e.g., mm wave frequencies such as FR2, FR3, and/or FR4)) in response to triggering an establishment of a new PC5 unicast link. The new PC5 unicast link may be used by a V2X application layer in the UE to support data transfer for a V2X service type. The V2X service type may be associated with a PC5 quality of service ("QoS") flow identified by packet format information ("PFI") corresponding to a particular V2X service requirement by the V2X application layer. In such an example, the SL CSI-RS resource is transmitted via a plurality of beams and/or panels at the same time with multi beam operation if a UE capability enables the transmission of the plurality of beam at the same time. In certain embodiments, CSI-RS may be beam swept at a different time instant in different spatial direction.

In some implementations of the first embodiment, a TX UE may transmit SL CSI-RS or any SL RS together with a higher layer direction communication request while CSI-RS is confined to actual data transmission subchannels. In one example, for CSI-RS transmission in a data region, measurements may be done and corresponding feedback (e.., if any) may be based on a usage type set for CSI-RS, such as a CSI-RS usage type set to "beam-management" or set to channel quality indicator ("CQI") "CQI-report".

In various embodiments, a TX UE may transmit SL CSI-RS resources with repetition where an RX UE can assume that the SL CSI-RS resources (e.g., in a SL CSI-RS resource set) in different symbols are transmitted with the same spatial domain transmission filter (e.g., same transmit beam). This may facilitate the RX UE to perform receiver-side beam sweeping and/or adjustment over the SL CSI-RS resources.

In certain embodiments, since a CSI-RS configuration is not known to an RX UE and a PC5 RRC connection is not yet established, the CSI-RS resource configuration may be signaled in layer 1 ("L1") control signaling so that the RX UE is aware of the CSI-RS configuration details including resource, pattern, density, ports, and so forth for decoding.

In some embodiments, a gNB may configure sidelink UEs using radio resource control ("RRC") common signaling with a reduced and/or sub-set of a CSI-RS configuration table (e.g., at least prior to PC5 RRC connection establishment) to be used for SL communication (e.g., based on a table). A number of configurations and a size of a table used may be reduced based on a UE capability in sidelink communication.

In various embodiments, a new 2nd SCI format may be defined to carry one or more CSI-RS parameters (e.g., such as row index, port, code division multiplexing ("CDM") type, density, and/or time and frequency domain location in a slot).

In some embodiments, a default SL CSI-RS configuration may be configured (e.g., possibly from a set of default SL CSI-RS configurations) using RRC common signaling for SL UEs. This may be used for transmitting and receiving SL CSI-RS before a PC5 RRC connection is established.

In various embodiments, a default SL CSI-RS configuration include a fixed number of SL CSI-RS ports, a CDM type, a density within a resource block ("RB") and/or sub-channels. In certain embodiments, a default configuration may include a fixed number of frequency resources and time symbols within a slot and a fixed periodicity with which the same default SL CSI-RS configuration may be repeated using one or more beams. This may avoid the configuration of any additional information for at least initial beam acquisition based on a SL CSI-RS. This default RS configuration may be configured per resource pool or SL bandwidth part ("BWP") and also shared with neighboring gNBs so that receiver UEs belonging to different gNBs may be aware of the default RS configuration.

In certain embodiments, if a default SL CSI-RS configuration is configured for a TX UE from a set of default SL CSI-RS configurations, an RX UE may detect the SL CSI-RS (e.g., via a blind search) based on the set of default SL CSI-RS configurations.

In some embodiments, a TX UE may configure a dedicated feedback resource for each SL CSI RS resource or a group of the SL CSI-RS resources with a corresponding slot offset for feedback reception. The feedback from a RX UE (e.g., UE2) may include L1 reference signal received power ("RSRP") ("L1-RSRP") (or L1 signal to interference and noise ratio ("SINR") ("L1-SINR")) feedback measurement corresponding to at least one (e.g., the strongest and/or best) SL CSI-RS resource and/or beam and/or an indication of the SL CSI-RS resource and/or beam in a single reporting instance. In one example, if the RX UE feedbacks and/or reports measurements for more than one SL CSI-RS resource, the feedback report may include the indication of the SL CSI-RS resources and/or beams included in the report. Moreover, the report may include the measurement (e.g., L1-RSRP) for the strongest beam and a differential value of measurement with respect to the strongest beam measurement for the remaining beams. In another example, a beam correspondence is assumed, and the feedback is sent on resources with the same spatial domain transmission filter used for reception of the corresponding SL CSI-RS transmission. Since each of the feedback resources are mapped to the specific CSI-RS resource, the inclusion of a beam and/or SL CSI-RS resource ID in a feedback message may not be needed.

In various embodiments, a TX UE may configure a single feedback resource that includes a slot offset for feedback reception considering each of the SL CSI-RS resources, an L1-RSRP feedback measurement, a beam ID and/or RS ID corresponding to the best beam. In some embodiments, if beam correspondence is supported, UE2 could select a TX beam based on a received RX beam from a TX UE (e.g., UE1).

In certain embodiments, if beam correspondence is not supported by a UE2, then the UE2 may transmit SL CSI-RS towards UE-1 using a plurality of simultaneous beams if supported by the UE capability or beam swept in different spatial directions. The UE2 may transmit SL CSI-RS using the same configuration signaled by UE1 and UE2 may start SL CSI-RS transmission towards UE1 after the slot offset signaled by UE1. Moreover, the UE2 may transmit SL CSI-RS in a resource reserved and signaled in SCI by UE1. In some embodiments, UE2 may send a request to a gNB for mode 1 resources for CSI-RS transmission. A slot offset signaled by UE1 to UE2 may be enough to cover a processing time and/or a delay incurred due to resource allocation in finding SL CSI-RS resources (e.g., SL CSI-RS resource determination). In various embodiments, at least two sets of SL CSI-RS resources are indicated, wherein one set (e.g., a first set) is used for SL CSI-RS transmission from UE1 to UE2, and another set (e.g., a second set) is used for SL CSI-RS transmission from UE2 to UE1.

In some embodiments, transmission of a feedback message may be based on SCI, PSFCH, a medium access control ("MAC") control element ("CE"), or multiplexing of a feedback message with a PSSCH.

In various embodiments, for standalone CSI-RS: for mode 1 operations, a TX UE may be configured with a separate SR for requesting SL CSI-RS resources from a gNB and a SL grant in downlink control information ("DCI") indicates a time-frequency resource for SL CSI-RS. In certain embodiments, a SL CSI-RS bandwidth and frequency domain starting position in a resource pool and/or SL BWP is indicated and a TX UE may use these mode 1 resources for the transmission of SL CSI-RS in a plurality of beams to one or more destinations.

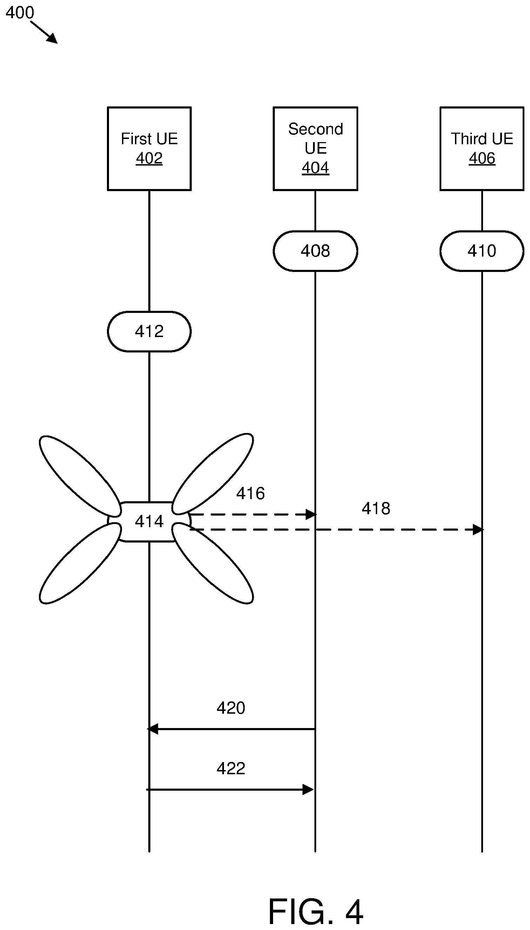

Figure 4 is a schematic block diagram illustrating one embodiment of a system 400 having standalone SL CSI-RS transmission prior to the transmission of a discovery request message in PC5 RRC. The system 400 includes a first UE 402 (UE-1), a second UE 404 (UE-2), and a third UE 406 (UE-3). The second UE 404 determines 408 a destination layer 2 ID for signaling reception. The third UE 406 determines 410 a destination layer 2 ID for signaling reception. A V2X application layer of the first UE 402 provides 412 application information for PC5 unicast connection. The first UE 402 transmits 414 physical sidelink control channel ("PSCCH") + CSI-RS optionally with a transmission 416 to the second UE 404 and/or a transmission 418 to the third UE 406. The second UE 404 provides 420 feedback on a best beam or transmit CSI-RS to the first UE 402. The first UE 402 provides 422 a direct communication request (e.g., via a higher layer).

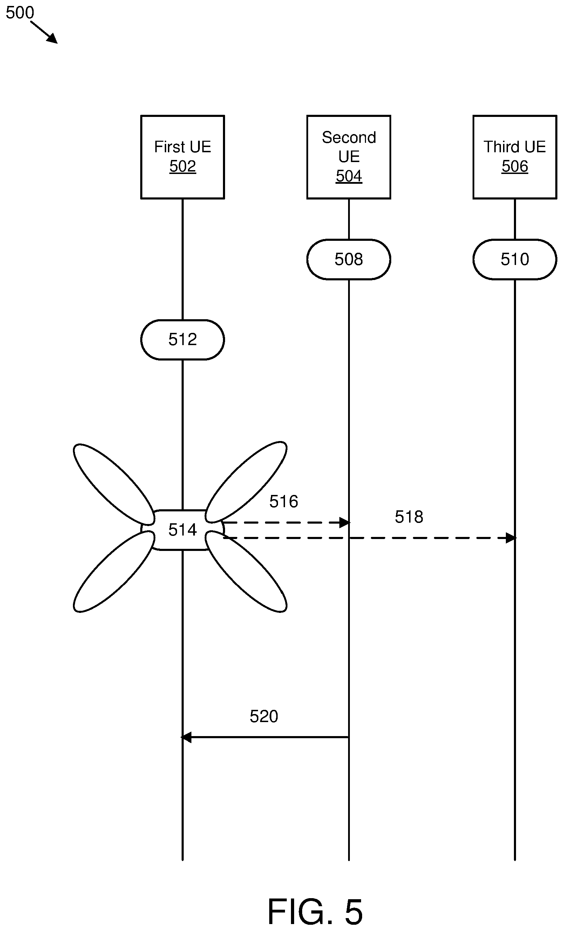

Figure 5 is a schematic block diagram illustrating one embodiment of a system 500 for SL CSI-RS transmitted together with a discovery request message in PC5 RRC. The system 500 includes a first UE 502 (UE-1), a second UE 504 (UE-2), and a third UE 506 (UE-3). The second UE 504 determines 508 a destination layer 2 ID for signaling reception. The third UE 506 determines 510 a destination layer 2 ID for signaling reception. A V2X application layer of the first UE 502 provides 512 application information for PC5 unicast connection. The first UE 502 transmits 514 PSCCH + CSI-RS optionally with a transmission 516 to the second UE 504 and/or a transmission 518 to the third UE 506 (e.g., via a direct communication request and/or via a higher layer. The second UE 504 provides 520 feedback on a best beam or transmit CSI-RS to the first UE 502 with a direct communication accept message.

In a second embodiment, a synchronization signal block ("SSB") may be used for SL beamforming, and/or a source-destination ID may link to a synchronization signal ID ("SSID").

In some embodiments, a UE may know an SSID based on a reception of a sidelink primary synchronization signal ("PSS") and secondary synchronizations signal ("SSS"), and the SSID may inform the UE about a type of synchronization source being used for the transmission of a sidelink synchronization signal ("SLSS"). If UE1 is a synchronization reference UE and it would like to initiate a unicast transmission with UE2, UE2, after receiving a discovery request, may not still be aware that the TX UE (UE1) is also a synchronization reference UE and there is no linkage between a source-destination ID and an SSID.

In various embodiments, a UE1 may signal an SSID to a UE2 in L1 control signaling or higher layer signaling, such as in SCI, a MAC CE, and/or PC5 RRC linking SSID with the source-destination ID.

In some embodiments, a synchronization reference UE may include a source ID in a physical sidelink broadcast channel ("PSBCH").

In various embodiments, PSBCH includes time-frequency resource information or a multiplexing pattern of SCI that is linked and multiplexed with a sidelink SSB transmission where SCI may indicate additional information about a source-destination ID to an RX UE or may provide a sidelink grant for PSSCH for conveying additional information to RX UEs. In certain embodiments, a pattern informs multiplexing of SCI and SSB whether it is time or frequency domain multiplexed and a fixed time slot offset or frequency offset between the SSB and SCI may be specified. In some embodiments, invalid assignment may indicate that there is no linkage of a source-destination ID and SSID.

In a third embodiment, PC5 RRC signaling may indicate a TCI table configuration, a TCI state, and a cast type indication for 2nd SCI and PSSCH.

In the third embodiment, a TX UE may configure a sidelink TCI table based on its supported configuration of a plurality of sidelink reference signals like SL CSI-RS, SL SSB, SL positioning reference signal ("PRS"), demodulation reference signal ("DMRS"), SL phase tracking reference signal ("PTRS"), and so forth. The TX UE may signal a dedicated sidelink TCI table configuration to be used during sidelink unicast communication using PC5 RRC signaling. In various embodiments, a MAC CE may signal a sidelink TCI table configuration along with a corresponding destination ID. In certain embodiments, a TX UE may signal a dedicated reference signal configuration together with a TCI state table in PC5 RRC or MAC CE. In some embodiments, a DMRS base sequence, a cyclic shift, a DMRS pattern, a DMRS resource, and so forth may be exchanged in PC5 RRC between a TX UE and a RX UE. In various embodiments, a plurality of DMRS resources (e.g., each corresponding to a beam and/or panel) may be signaled.

In certain embodiments, a 1st SCI is always broadcast to inform neighboring UEs about a resource usage to avoid a hidden node problem. The 1st SCI may inform the reservation of resources for RX UEs which may be helpful for RX UEs to receive a subsequent 1st SCI reception in reserved resources using signaled via an RX-spatial filter and/or RX beam. In some embodiments, a TCI state indicating an RX spatial filter and/or RX beam used for receiving 1st SCI may be signaled to an RX UE as part of PC5 RRC signaling (or PC5-S signaling). In various embodiments, sidelink UEs configured and/or preconfigured with a common reference signal configuration that may be based on SL CSI-RS or DMRS which is associated with a common TCI state table for the reception of 1st SCI and any broadcast type traffic.

In certain embodiments, a TCI state may be signaled in 1st SCI informing an RX UE about an RX-spatial filter and/or RX beam for receiving 2nd SCI and PSSCH and may be used by neighboring UEs for a sensing procedure (e.g., SCI decoding) to be aware of a resource usage and/or occupancy per beam.

In some embodiments, a cast type may be signaled in 1st SCI and may be used for implicitly informing an RX UE to switch an RX spatial filter and/or RX beam (e.g., between broadcast and unicast reception) for receiving 2nd SCI and PSSCH. In various embodiments, a cast type may be used to switch a corresponding TCI state table between a common TCI state table for broadcast and a dedicated TCI state table for unicast and/or groupcast. In such embodiments, the TCI state in the 1st SCI informs the TCI state in the corresponding TCI table to be used by the RX UE.

In certain embodiments, there may be a jointly encoded cast type with a 2nd SCI format indication and cast type using reserved states in SCI 1-A like as shown in Table 1.

**Table 1: 2nd Stage SCI Format and Cast Type Indicator**

| Value of 2^{nd} stage SCI format and Cast type indicator field | 2nd-stage SCI format, Cast type |
|---|---|
| 00 | SCI format 2-A, Broadcast |
| 01 | SCI format 2-A, Groupcast |
| 10 | SCI format 2-A, Unicast |
| 11 | SCI format 2-B, Groupcast |

In a fourth embodiment, a beam may be used for the transmission of 1st SCI, 2nd SCI and PSSCH.

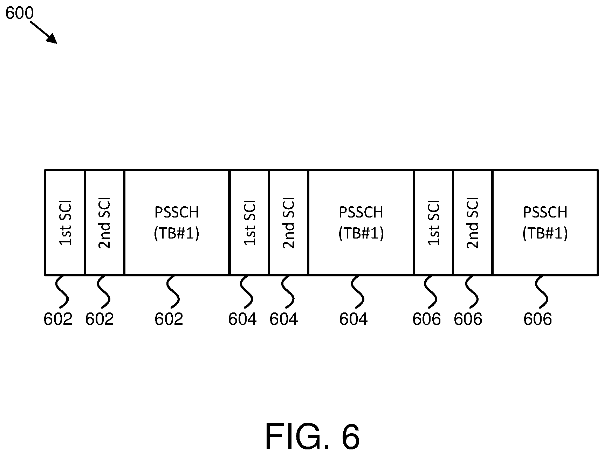

In the fourth embodiment, for broadcast transmission, 1st SCI, 2nd SCI and PSSCH are transmitted in different beam directions as shown in Figure 6.

Specifically, Figure 6 is a schematic block diagram 600 illustrating one embodiment of beamforming for broadcast transmission. The transmissions include 1st SCI, 2nd SCI, and PSSCH (TB#1) transmissions transmitted over a first beam 602 (beam #1), a second beam 604 (beam #2), and a third beam 606 (beam #3).

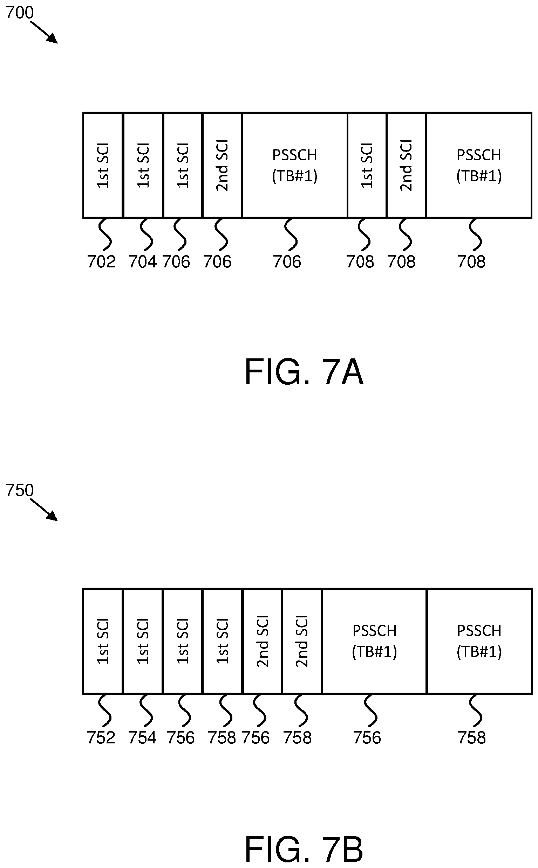

In certain embodiments, for groupcast, 1st SCI may be beam swept in all directions (e.g., omni-directional or substantial spherical coverage) informing neighboring UEs about resource occupancy while the 2nd SCI and PSSCH are transmitted in a sub-set of beams as shown in Figure 7 using one of the options for a destination group ID. The subset of beams may be determined based on the reception of dedicated hybrid automatic repeat request ("HARQ") acknowledgement ("ACK") ("HARQ-ACK") feedback from RX UEs belonging to the same destination group ID. In various embodiments, the subset of beams may be determined based on a previous transmission and corresponding feedback reception to the same destination group. A starting symbol for 2nd SCI reception may be signaled in the 1st SCI.

Figure 7A is a schematic block diagram 700 illustrating one embodiment of a first option for beamforming for groupcast transmission. The transmissions include 1st SCI, 2nd SCI, and PSSCH (TB#1) transmissions transmitted over a first beam 702 (beam #1), a second beam 704 (beam #2), a third beam 706 (beam #3), and a fourth beam 708 (beam #4).

Figure 7B is a schematic block diagram 750 illustrating one embodiment of a second option for beamforming for groupcast transmission. The transmissions include 1st SCI, 2nd SCI, and PSSCH (TB#1) transmissions transmitted over a first beam 752 (beam #1), a second beam 754 (beam #2), a third beam 756 (beam #3), and a fourth beam 758 (beam #4).

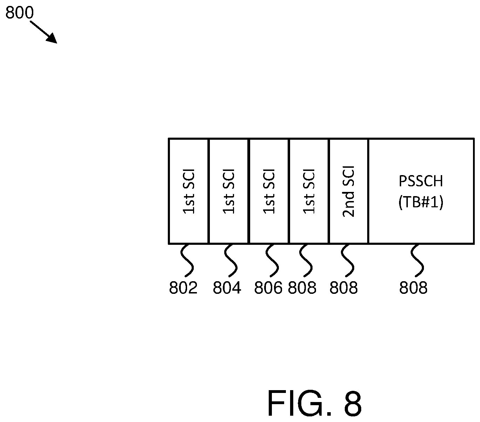

In certain embodiments, for unicast, 1st SCI is beam swept in all directions informing neighboring UEs about the resource occupancy while 2nd SCI and PSSCH are transmitted in a one of the beams that was established during the unicast beam establishment as shown in Figure 8.

In some embodiments, a TX UE and/or a RX UE may store usage of beam pair identifiers ("IDs") with source-destination IDs so that the TX UE and/or the RX UE knows which beam should be used for transmission and/or reception per source-destination ID.

Figure 8 is a schematic block diagram illustrating one embodiment of beamforming for unicast transmission. The transmissions include 1st SCI, 2nd SCI, and PSSCH (TB#1) transmissions transmitted over a first beam 802 (beam #1), a second beam 804 (beam #2), a third beam 806 (beam #3), and a fourth beam 808 (beam #4).

In various embodiments, for frequency division multiplexing ("FDM") of 1st SCI and PSSCH, if a UE supports multibeam operation, the UE may use two spatial filters and/or beams - one for the reception of PSCCH while another beam for the reception of PSSCH. In certain embodiments, a number of potential simultaneous beams to be used for sidelink communication may be semi-statically configured and/or preconfigured.

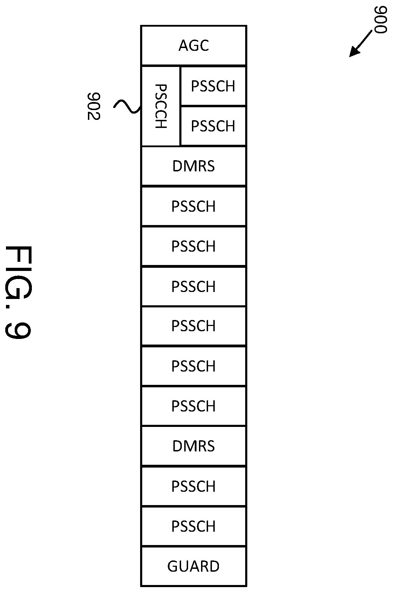

Figure 9 is a schematic block diagram 900 illustrating one embodiment of FDM of PSCCH and PSSCH. The transmissions include automatic gain control ("AGC"), PSSCH, PSCCH, DMRS, and guard transmissions. At a time 902, the PSSCH and PSCCH are FDMed.

In a fifth embodiment, PSFCH resource configuration may be based on beamforming.

In the fifth embodiment, for common HARQ-ACK for a groupcast feedback option 1, in one embodiment, if a UE is capable of beam-correspondence, then multiple resource occasions for PSFCH are configured corresponding to each beam, panel, and/or spatial filter on which PSSCH is transmitted, where the same spatial filter is used to transmit PSFCH as used to receive the corresponding PSSCH. Each of the PSFCH resources corresponding to each transmission of PSSCH in a certain spatial direction, beam, panel, and/or spatial filter is configured with a certain offset. As an example, PSFCH resource #1 is configured in slot #4 for a corresponding PSSCH transmission on slot #0 with beam ID #1, PSFCH resource #2 is configured in slot #5 for a corresponding PSSCH transmission on slot #1 with beam ID #2, and so forth.

In the fifth embodiment, for common HARQ-ACK for a groupcast feedback option 1, in another embodiment, a single resource for PSFCH may be configured considering all or a subset of beams, panels, and/or spatial filters on which PSSCH is transmitted. The beam to be used for transmitting PSFCH may be indicated to a UE in SCI with a separate TCI state for PSFCH.

Moreover, in the fifth embodiment, for common HARQ-ACK for a groupcast feedback option 1, in certain embodiments, a UE may determine to perform retransmission in each beam (e.g., all beams) or subset of beams, panels, and/or spatial filters based on negative acknowledgement ("NACK") feedback reception from each of the configured PSFCH resource occasions where each PSFCH resource occasion corresponds to each PSSCH transmission in each beam, panel, and/or spatial filter.

Further, in the fifth embodiment, for common HARQ-ACK for a groupcast feedback option 1, in some embodiments, a UE may schedule retransmission in a beam and/or spatial filter as soon as it receives NACK from each of the PSFCH resource occasions corresponding to the PSSCH transmission and it is not necessary to wait until it receives NACK feedback from all PSFCH resource occasions corresponding to each of the PSSCH transmissions. In certain embodiments, a UE may schedule retransmission after receiving NACK feedback from each of the configured PSFCH transmissions corresponding to each of the PSSCH transmissions.

In various embodiments, for mode1, if only one physical uplink control channel ("PUCCH") resource is assigned for multiple PSFCH resource occasions, then a UE may feedback NACK in the PUCCH resource if the UE receives NACK from one of the configured PSFCH resource occasions, while the UE may feedback ACK in the PUCCH resource if a transmitter UE does not receive NACK from each of the PSFCH resource occasions.

In certain embodiments, for mode 1, if multiple PUCCH resources are assigned for each of the PSFCH resource occasions, then a UE may feedback NACK in the PUCCH resource if it receives NACK from the corresponding PSFCH resource occasions, while the UE may feedback ACK in the PUCCH resource if the TX UE does not receive any NACK in the corresponding PSFCH resource occasions.

In the fifth embodiment, for dedicated HARQ-ACK for groupcast feedback option 2, in one embodiment, multiple resources for PSFCH carrying dedicated HARQ-ACK for each UE belonging to a group are configured corresponding to each beam, panel, and/or spatial filter on which PSSCH is transmitted. Each of the PSFCH resources corresponding to each transmission of PSSCH in a certain spatial direction, beam, panel, and/or spatial filter is configured with a certain offset. As an example, PSFCH resource #1 is configured in slot #4 for a corresponding PSSCH transmission on slot #0 with beam ID #1, PSFCH resource #2 configured in slot #5 for a corresponding PSSCH transmission on slot #1 with beam ID#2, and so forth.

In certain embodiments, a UE may determine to perform retransmission in each beam (e.g., all beams) or a subset of beams, panels, and/or spatial filters based on NACK feedback reception from each of the configured PSFCH resource occasions where each PSFCH resource occasion corresponds to each PSSCH transmission in each beam, panel, and/or spatial filter.

In some embodiments, a UE may schedule retransmission only after receiving NACK feedback from each of the configured PSFCH transmissions corresponding to each of the PSSCH transmissions.

In various embodiments, a UE may determine whether to perform new transmission or re-transmission in each beam (e.g., all beams) or a subset of beams, panels, and/or spatial filters after it receives at least one ACK or NACK from all RX UEs belonging to a group from each of the configured PSFCH reception occasions. For mode 1, the UE may generate ACK in a PUCCH resource only if the UE determines ACK from at least one PSFCH reception occasion.

In certain embodiments, a single resource for PSFCH carrying dedicated HARQ-ACK may be configured at an end of a PSSCH transmission occasion in each of the beams on which PSSCH is transmitted.

In some embodiments, for RX UEs transmitting multiple PSFCH transmissions in a slot, each dedicated HARQ-ACK may be transmitted on a specific resource in a specific beam direction corresponding to the beam intended for that UE.

In various embodiments, for beam correspondence, a same transmit may be is used for PSFCH transmission as that of a receive beam of PSSCH.

In certain embodiments, in SCI, a separate TCI state may be signaled for a transmission of PSFCH from an RX UE to a TX UE. The separate TCI state may either be configured as part of the same TCI table that is configured by an PC5 RRC connection. In such embodiments, at least two TCI states may be configured for an index such that one TCI state is applied for the transmission of PSSCH (e.g., along with SCI) from the TX UE to the RX UE and the second TCI state is applied for the transmission of PSFCH from the RX UE to the TX UE. In another example, two separate TCI tables are configured, where each table is used for opposite link direction between the same pair of UEs.

In a sixth embodiment, sidelink beam failure and recovery may be performed. In the sixth embodiment, in V2X configurations with vehicular mobility, there may be a high probability that SL beam-based transmissions may fail and, therefore, SL beam recovery procedures may be triggered if there is SL beam failure.

In certain embodiments, there may be SL beam failure detection ("BFD"): the RX UE may detect SL beam failure based on a measured L1-RSRP SL CSI-RS or any sidelink reference signal ("SL-RS") falling below a configured threshold or SL HARQ-feedback counter (e.g., NACK or discontinuous transmission ("DTX")) or based on a configured threshold of angle of departure ("AoD"), time difference of arrival ("TDoA"), and/or angle of arrival ("AoA") between a beam and/or panel pair. A TX UE may configure a beam failure threshold and/or maximum counter via PC5 RRC, a gNB may configure a common threshold and/or maximum counter via RRC common signaling (e.g., system information broadcast signaling), or this threshold and/or maximum counter may be preconfigured. In some embodiments, other SL beam quality metrics such as reference signal received quality ("RSRQ") and SINR and a hypothetical block error rate ("BLER") of SCI (e.g., 1st SCI) may be considered for SL BFD.

In various embodiments, there may be a new SL beam candidate identification: upon SL BFD, a RX UE initiates procedures to identify a new SL beam from a SL beam candidate list. The identification of the new TX SL beam may be based on a best measured SL CSI-RS or any SL-RS L1-RSRP from a SL beam candidate list (e.g., TX-UE common beam list) by the RX UE. In certain embodiments, an RX UE may perform TX UE measurements based on beam quality metrics and may report a better beam candidate to a TX UE for beam and/or panel reselection and/or switching using the following criteria: 1) RX UE periodically measures the SL TX beam at a configured interval; 2) congestion level of a certain resource pool within a beam exceeds a configured threshold; 3) TX and RX distance exceeds a threshold, where the TX-RX distance may be calculated using radio access technology ("RAT") dependent ("RAT-dependent") (e.g., AoD, TDoA) or RAT independent ("RAT-independent") (e.g., global navigation satellite systems ("GNSS"), inertial measurement unit ("IMU")) techniques; and/or 4) TX-RX beam measurement like AoD, TDoA may be calculated for each of candidate beam and/or panel pair.

In some embodiments, there may be a new SL beam recovery request: an RX UE may report a SL BF indication to a gNB via a SL beam recovery request message or similar message for a SL beam recovery response to a TX UE in mode 1. In various embodiments, an RX UE may report a SL BF indication and a newly identified beam to a TX UE via a SL beam recovery request message or a similar message (e.g., PC5 sidelink ("S") ("PC5-S") signaling message exchange) and the TX UE may report a SL BF indication to the gNB for reallocation of SL CSI-RS resources to the TX UE in mode 1. In certain embodiments, a gNB may signal a SL beam recovery message with a candidate beam list to a TX UE and/or RX UE. In some embodiments, an RX UE may initiate transmission of SL CSI-RS and/or SL RS as part of a beam recovery procedure towards a TX UE, instead of transmitting a beam failure indication. The RX UE may start SL CSI-RS and/or SL RS transmission using a plurality of beams and/or panels sweeping in a differential spatial direction or simultaneous transmission using multi beam operation to establish beam with the peer UE using a default CSI-RS configuration for beam establishment or a default CSI RS configuration configured as part of beam failure.

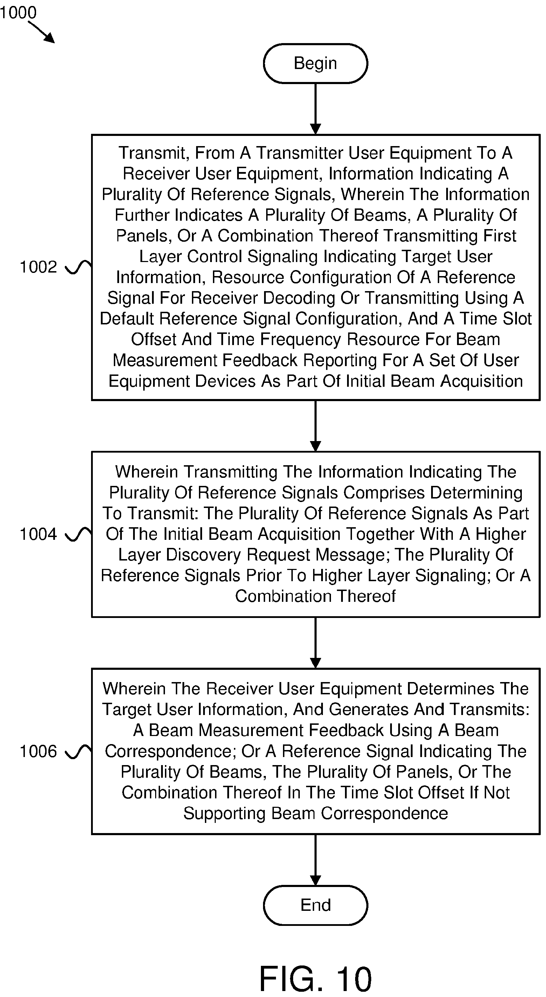

Figure 10 is a flow chart diagram illustrating one embodiment of a method 1000 for multiple sidelink reference signals. In some embodiments, the method 1000 is performed by an apparatus, such as the remote unit 102. In certain embodiments, the method 1000 may be performed by a processor executing program code, for example, a microcontroller, a microprocessor, a CPU, a GPU, an auxiliary processing unit, a FPGA, or the like.

In various embodiments, the method 1000 includes transmitting 1002, from a transmitter user equipment to a receiver user equipment, information indicating a plurality of reference signals. The information further indicates a plurality of beams, a plurality of panels, or a combination thereof transmitting first layer control signaling indicating target user information, resource configuration of a reference signal for receiver decoding or transmitting using a default reference signal configuration, and a time slot offset and time frequency resource for beam measurement feedback reporting for a set of user equipment devices as part of initial beam acquisition. Transmitting the information indicating the plurality of reference signals includes determining 1004 to transmit: the plurality of reference signals as part of the initial beam acquisition together with a higher layer discovery request message; the plurality of reference signals prior to higher layer signaling; or a combination thereof. The receiver user equipment determines 1006 the target user information, and generates and transmits: a beam measurement feedback using a beam correspondence; or a reference signal indicating the plurality of beams, the plurality of panels, or the combination thereof in the time slot offset if not supporting beam correspondence.

In certain embodiments, the method 1000 further comprises configuring a separate scheduling request resource for requesting sidelink resources from a network device for transmission of a standalone channel state information reference signal. In some embodiments, the method 1000 further comprises receiving downlink control information indicating a sidelink resource for the transmission of the plurality of reference signals. In various embodiments, the method 1000 further comprises configuring a dedicated feedback resource for each channel state information reference signal resource with a corresponding slot off for feedback reception, wherein feedback carried by the dedicated feedback resource comprises a first layer reference signal received power feedback measurement for a corresponding channel state information reference signal resource from the receiver user equipment.

In one embodiment, the method 1000 further comprises transmitting configuration information for a dedicated transmission configuration indicator state table to the receiver user equipment via radio resource control signaling. In certain embodiments, the method 1000 further comprises indicating a transmission configuration indicator state or cast type in first sidelink control information, wherein the first sidelink control information indicates a receive spatial filter, a receive beam, or a combination thereof to be used for second sidelink control information and physical sidelink shared channel reception. In some embodiments, the method 1000 further comprises selecting the dedicated transmission configuration indicator state table from at least one configured transmission configuration indicator state table using a cast type indicator.

In various embodiments, the method 1000 further comprises transmitting configuration information for a dedicated transmission configuration indicator state table to the receiver user equipment via a medium access control control element or a destination identifier. In one embodiment, the method 1000 further comprises: transmitting, via beam sweeping transmission, first sidelink control information in all direction informing user equipments about resource occupancy; transmitting, via groupcast transmission, second sidelink control information and a physical sidelink shared channel transmission in a subset of beams, wherein the subset of beam is identified based on reception of a dedicated hybrid automatic repeat request report or based on a previous transport block transmission to the same destination identifier; transmitting, via broadcast transmission, the first sidelink control information, the second sidelink control information, and the physical sidelink control channel transmission in all configured potential transmit beams; and transmitting, via unicast transmission, the second sidelink control information and the physical sidelink control channel transmission in one beam.

In certain embodiments, the method 1000 further comprises allocating multiple physical sidelink feedback channel resources corresponding to different beams on which a physical sidelink channel is transmitted. In some embodiments, the method 1000 further comprises allocating a single resource for a physical sidelink feedback channel that aggregates hybrid automatic repeat request feedback from all beams transmitting a physical sidelink channel. In various embodiments, the receiver user equipment performs sidelink beam failure detection based on a configured event trigger and reports a sidelink beam failure event to a network device or to the transmitter user equipment.

In one embodiment, the receiver user equipment performs new sidelink beam candidate identification and reports a best available beam from a beam candidate list to the transmitter user equipment. In certain embodiments, the method 1000 further comprises transmitting the plurality of reference signals with repetition, wherein the plurality of reference signals is transmitted with the same spatial domain transmission filter.

In some embodiments, the default reference signal configuration comprises a fixed port, a code division multiplexing type, a density within a resource block, a density within a sub-channel, a fixed number of frequency resources, a fixed number of time symbols, a fixed periodicity, or some combination thereof. In various embodiments, the default reference signal configuration is configured per resource pool or per sidelink bandwidth part.

In one embodiment, a method comprises: transmitting, from a transmitter user equipment to a receiver user equipment, information indicating a plurality of reference signals, wherein the information further indicates a plurality of beams, a plurality of panels, or a combination thereof transmitting first layer control signaling indicating target user information, resource configuration of a reference signal for receiver decoding or transmitting using a default reference signal configuration, and a time slot offset and time frequency resource for beam measurement feedback reporting for a set of user equipment devices as part of initial beam acquisition; wherein transmitting the information indicating the plurality of reference signals comprises determining to transmit: the plurality of reference signals as part of the initial beam acquisition together with a higher layer discovery request message; the plurality of reference signals prior to higher layer signaling; or a combination thereof; and wherein the receiver user equipment determines the target user information, and generates and transmits: a beam measurement feedback using a beam correspondence; or a reference signal indicating the plurality of beams, the plurality of panels, or the combination thereof in the time slot offset if not supporting beam correspondence.

In certain embodiments, the method further comprises configuring a separate scheduling request resource for requesting sidelink resources from a network device for transmission of a standalone channel state information reference signal.

In some embodiments, the method further comprises receiving downlink control information indicating a sidelink resource for the transmission of the plurality of reference signals.

In various embodiments, the method further comprises configuring a dedicated feedback resource for each channel state information reference signal resource with a corresponding slot off for feedback reception, wherein feedback carried by the dedicated feedback resource comprises a first layer reference signal received power feedback measurement for a corresponding channel state information reference signal resource from the receiver user equipment.

In one embodiment, the method further comprises transmitting configuration information for a dedicated transmission configuration indicator state table to the receiver user equipment via radio resource control signaling.

In certain embodiments, the method further comprises indicating a transmission configuration indicator state or cast type in first sidelink control information, wherein the first sidelink control information indicates a receive spatial filter, a receive beam, or a combination thereof to be used for second sidelink control information and physical sidelink shared channel reception.

In some embodiments, the method further comprises selecting the dedicated transmission configuration indicator state table from at least one configured transmission configuration indicator state table using a cast type indicator.

In various embodiments, the method further comprises transmitting configuration information for a dedicated transmission configuration indicator state table to the receiver user equipment via a medium access control control element or a destination identifier.

In one embodiment, the method further comprises: transmitting, via beam sweeping transmission, first sidelink control information in all direction informing user equipments about resource occupancy; transmitting, via groupcast transmission, second sidelink control information and a physical sidelink shared channel transmission in a subset of beams, wherein the subset of beam is identified based on reception of a dedicated hybrid automatic repeat request report or based on a previous transport block transmission to the same destination identifier; transmitting, via broadcast transmission, the first sidelink control information, the second sidelink control information, and the physical sidelink control channel transmission in all configured potential transmit beams; and transmitting, via unicast transmission, the second sidelink control information and the physical sidelink control channel transmission in one beam.

In certain embodiments, the method further comprises allocating multiple physical sidelink feedback channel resources corresponding to different beams on which a physical sidelink channel is transmitted.

In some embodiments, the method further comprises allocating a single resource for a physical sidelink feedback channel that aggregates hybrid automatic repeat request feedback from all beams transmitting a physical sidelink channel.

In various embodiments, the receiver user equipment performs sidelink beam failure detection based on a configured event trigger and reports a sidelink beam failure event to a network device or to the transmitter user equipment.

In one embodiment, the receiver user equipment performs new sidelink beam candidate identification and reports a best available beam from a beam candidate list to the transmitter user equipment.

In certain embodiments, the method further comprises transmitting the plurality of reference signals with repetition, wherein the plurality of reference signals is transmitted with the same spatial domain transmission filter.

In some embodiments, the default reference signal configuration comprises a fixed port, a code division multiplexing type, a density within a resource block, a density within a sub-channel, a fixed number of frequency resources, a fixed number of time symbols, a fixed periodicity, or some combination thereof.

In various embodiments, the default reference signal configuration is configured per resource pool or per sidelink bandwidth part.

In one embodiment, an apparatus comprises: a transmitter that transmits, from a transmitter user equipment to a receiver user equipment, information indicating a plurality of reference signals, wherein the information further indicates a plurality of beams, a plurality of panels, or a combination thereof transmitting first layer control signaling indicating target user information, resource configuration of a reference signal for receiver decoding or transmitting using a default reference signal configuration, and a time slot offset and time frequency resource for beam measurement feedback reporting for a set of user equipment devices as part of initial beam acquisition; wherein transmitting the information indicating the plurality of reference signals comprises determining to transmit: the plurality of reference signals as part of the initial beam acquisition together with a higher layer discovery request message; the plurality of reference signals prior to higher layer signaling; or a combination thereof; and wherein the receiver user equipment determines the target user information, and generates and transmits: a beam measurement feedback using a beam correspondence; or a reference signal indicating the plurality of beams, the plurality of panels, or the combination thereof in the time slot offset if not supporting beam correspondence.

In certain embodiments, the apparatus further comprises a processor that configures a separate scheduling request resource for requesting sidelink resources from a network device for transmission of a standalone channel state information reference signal.

In some embodiments, the apparatus further comprises a receiver that receives downlink control information indicating a sidelink resource for the transmission of the plurality of reference signals.

In various embodiments, the apparatus further comprises a processor that configures a dedicated feedback resource for each channel state information reference signal resource with a corresponding slot off for feedback reception, wherein feedback carried by the dedicated feedback resource comprises a first layer reference signal received power feedback measurement for a corresponding channel state information reference signal resource from the receiver user equipment.

In one embodiment, the transmitter transmits configuration information for a dedicated transmission configuration indicator state table to the receiver user equipment via radio resource control signaling.

In certain embodiments, the apparatus further comprises a processor that indicates a transmission configuration indicator state or cast type in first sidelink control information, wherein the first sidelink control information indicates a receive spatial filter, a receive beam, or a combination thereof to be used for second sidelink control information and physical sidelink shared channel reception.

In some embodiments, the apparatus further comprises a processor that selects the dedicated transmission configuration indicator state table from at least one configured transmission configuration indicator state table using a cast type indicator.

In various embodiments, the transmitter transmits configuration information for a dedicated transmission configuration indicator state table to the receiver user equipment via a medium access control control element or a destination identifier.

In one embodiment, the transmitter: transmits, via beam sweeping transmission, first sidelink control information in all direction informing user equipments about resource occupancy; transmits, via groupcast transmission, second sidelink control information and a physical sidelink shared channel transmission in a subset of beams, wherein the subset of beam is identified based on reception of a dedicated hybrid automatic repeat request report or based on a previous transport block transmission to the same destination identifier; transmits, via broadcast transmission, the first sidelink control information, the second sidelink control information, and the physical sidelink control channel transmission in all configured potential transmit beams; and transmits, via unicast transmission, the second sidelink control information and the physical sidelink control channel transmission in one beam.

In certain embodiments, the apparatus further comprises a processor that allocates multiple physical sidelink feedback channel resources corresponding to different beams on which a physical sidelink channel is transmitted.

In some embodiments, the apparatus further comprises a processor that allocates a single resource for a physical sidelink feedback channel that aggregates hybrid automatic repeat request feedback from all beams transmitting a physical sidelink channel.

In various embodiments, the receiver user equipment performs sidelink beam failure detection based on a configured event trigger and reports a sidelink beam failure event to a network device or to the transmitter user equipment.

In one embodiment, the receiver user equipment performs new sidelink beam candidate identification and reports a best available beam from a beam candidate list to the transmitter user equipment.

In certain embodiments, the transmitter transmits the plurality of reference signals with repetition, wherein the plurality of reference signals is transmitted with the same spatial domain transmission filter.

In some embodiments, the default reference signal configuration comprises a fixed port, a code division multiplexing type, a density within a resource block, a density within a sub-channel, a fixed number of frequency resources, a fixed number of time symbols, a fixed periodicity, or some combination thereof.

In various embodiments, the default reference signal configuration is configured per resource pool or per sidelink bandwidth part.

Embodiments may be practiced in other specific forms. The described embodiments are to be considered in all respects only as illustrative and not restrictive. The scope of the invention is indicated by the appended claims.

## Claims

1. A transmitter user equipment (200) for sidelink communication, the transmitter user equipment (200) comprising:
a transmitter (210) arranged to transmit, to a receiver user equipment, information indicating a plurality of reference signals, wherein the information further indicates a plurality of beams, a plurality of panels, or a combination thereof;
the transmitter (210) further arranged to transmit first layer control signaling indicating target user information and a time slot offset and time frequency resource for beam measurement feedback reporting for a set of user equipment devices as part of initial beam acquisition;
wherein transmitting the information indicating the plurality of reference signals comprises transmitting the plurality of reference signals as part of the initial beam acquisition together with a higher layer discovery request message.

2. The transmitter user equipment (200) of claim 1, further comprising a processor (202) arranged to configure a separate scheduling request resource for requesting sidelink resources from a network device for transmission of a standalone channel state information reference signal.

3. The transmitter user equipment (200) of claim 2, further comprising a receiver (212) arranged to receive downlink control information indicating a sidelink resource for the transmission of the plurality of reference signals.

4. The transmitter user equipment (200) of claim 1, further comprising a processor (202) arranged to configure a dedicated feedback resource for each channel state information reference signal resource with a corresponding slot off for feedback reception, wherein feedback carried by the dedicated feedback resource comprises a first layer reference signal received power feedback measurement for a corresponding channel state information reference signal resource from a receiver user equipment.

5. The transmitter user equipment (200) of claim 1, wherein the transmitter (210) is further arranged to transmit configuration information for a dedicated transmission configuration indicator state table to the receiver user equipment via radio resource control signaling.

6. The transmitter user equipment (200) of claim 5, further comprising a processor (202) arranged to indicate a transmission configuration indicator state or cast type in first sidelink control information, wherein the first sidelink control information indicates a receive spatial filter, a receive beam, or a combination thereof to be used for second sidelink control information and physical sidelink shared channel reception.

7. The transmitter user equipment (200) of claim 5, further comprising a processor (202) arranged to select the dedicated transmission configuration indicator state table from at least one configured transmission configuration indicator state table using a cast type indicator.

8. The transmitter user equipment (200) of claim 1, wherein the transmitter (210) is further arranged to transmit configuration information for a dedicated transmission configuration indicator state table to a receiver user equipment via a medium access control control element or a destination identifier.

9. The transmitter user equipment (200) of claim 1, wherein the transmitter (210) is further arranged to:
transmit, via beam sweeping transmission, first sidelink control information in all direction informing user equipments about resource occupancy;
transmit, via groupcast transmission, second sidelink control information and a physical sidelink shared channel transmission in a subset of beams, wherein the subset of beam is identified based on reception of a dedicated hybrid automatic repeat request report or based on a previous transport block transmission to the same destination identifier;
transmit, via broadcast transmission, the first sidelink control information, the second sidelink control information, and the physical sidelink control channel transmission in all configured potential transmit beams; and
transmit, via unicast transmission, the second sidelink control information and the physical sidelink control channel transmission in one beam.

10. The transmitter user equipment (200) of claim 1, further comprising a processor (202) arranged to allocate multiple physical sidelink feedback channel resources corresponding to different beams on which a physical sidelink channel is transmitted.

11. The transmitter user equipment (200) of claim 1, further comprising a processor (202) arranged to allocate a single resource for a physical sidelink feedback channel that aggregates hybrid automatic repeat request feedback from all beams transmitting a physical sidelink channel.

12. The transmitter user equipment (200) of claim 1, wherein the transmitter (210) is further arranged to transmit the plurality of reference signals with repetition, wherein the plurality of reference signals is transmitted with the same spatial domain transmission filter.

13. The transmitter user equipment (200) of claim 1, wherein the default reference signal configuration comprises a fixed port, a code division multiplexing type, a density within a resource block, a density within a sub-channel, a fixed number of frequency resources, a fixed number of time symbols, a fixed periodicity, or some combination thereof, and the default reference signal configuration is configured per resource pool or per sidelink bandwidth part.

## Patentansprüche

1. Senderendgerät (200) zur Sidelink-Kommunikation, wobei das Senderendgerät (200) umfasst:
einen Sender (210), angeordnet zum Senden von Informationen, die eine Vielzahl von Referenzsignalen angeben, an ein Empfängerendgerät, wobei die Informationen ferner eine Vielzahl von Strahlen, eine Vielzahl von Panels oder eine Kombination hiervon angeben;
wobei der Sender (210) ferner zum Senden einer ersten Schichtsteuersignalisierung angeordnet ist, die Zielbenutzerinformationen und einen Zeitslotversatz und eine Zeitfrequenzressource für die Strahlmessungs-Rückmeldeberichterstattung für eine Menge von Endgeräten als Teil der Anfangsstrahlerfassung angeben;
wobei das Senden der Information, welche die Vielzahl von Referenzsignalen angeben, das Senden der Vielzahl von Referenzsignalen als Teil der Anfangsstrahlerfassung zusammen mit einer Erkennungsanforderungsnachricht höherer Schichten umfasst.

2. Senderendgerät (200) nach Anspruch 1, ferner umfassend einen Prozessor (202), angeordnet zum Ausbilden einer separaten Planungsanforderungsressource zur Anforderung von Sidelink-Ressourcen von einer Netzwerkvorrichtung für das Senden eines eigenständigen Kanalzustandsinformations-Referenzsignals.

3. Senderendgerät (200) nach Anspruch 2, ferner umfassend einen Empfänger (212), angeordnet zum Empfangen von Downlink-Steuerinformationen, die eine Sidelink-Ressource für das Senden der Vielzahl von Referenzsignalen angeben.

4. Senderendgerät (200) nach Anspruch 1, ferner umfassend einen Prozessor (202), angeordnet zum Ausbilden einer dedizierten Rückmelderessource für jede Kanalzustandsinformations-Referenzsignalressource mit einem entsprechenden ausgeschalteten Slot für den Rückmeldungsempfang, wobei die von der dedizierten Rückmelderessource übermittelte Rückmeldung ein erstes Schichtreferenzsignal umfasst, das als Leistungsrückmeldungsmessung für eine entsprechende Kanalzustandsinformations-Referenzsignalressource von einem Empfängerendgerät empfangen wird.

5. Senderendgerät (200) nach Anspruch 1, wobei der Sender (210) ferner zum Senden von Konfigurationsinformationen für eine dedizierte Sendekonfigurationsindikator-Zustandstabelle über eine Funkressourcen-Steuersignalisierung an das Empfängerendgerät angeordnet ist.

6. Senderendgerät (200) nach Anspruch 5, ferner umfassend einen Prozessor (202), angeordnet zum Angeben eines Sendekonfigurationsindikatorzustands oder eines Umwandlungstyps in ersten Sidelink-Steuerinformationen, wobei die ersten Sidelink-Steuerinformationen ein Empfangsraumfilter, einen Empfangsstrahl oder eine Kombination hiervon angeben, die für zweite Sidelink-Steuerinformationen und physikalischen Sidelink-Gleichwellenempfang zu verwenden sind.

7. Senderendgerät (200) nach Anspruch 5, ferner umfassend einen Prozessor (202), angeordnet zum Auswählen der dedizierten Sendekonfigurationsindikator-Zustandstabelle aus wenigstens einer konfigurierten Sendekonfigurationsindikator-Zustandstabelle unter Verwendung eines Umwandlungstypindikators.

8. Senderendgerät (200) nach Anspruch 1, wobei der Sender (210) ferner zum Senden von Konfigurationsinformationen für eine dedizierte Sendekonfigurationsindikator-Zustandstabelle an ein Empfängerendgerät über ein Medium-Acess-Control-Steuerelement oder einen Zielidentifizierer angeordnet ist.

9. Senderendgerät (200) nach Anspruch 1, wobei der Sender (210) ferner angeordnet ist zum:
Senden von ersten Sidelink-Steuerinformationen über ein Beam-Sweeping-Senden in alle Richtungen, um Endgeräte über die Belegung von Ressourcen zu informieren;
Senden von zweiten Sidelink-Steuerinformationen und eines physikalischen Sidelink-Gleichwellensendens über ein Groupcast-Senden in einer Teilmenge von Strahlen, wobei die Teilmenge von Strahlen auf der Basis des Empfangs eines dedizierten hybriden automatischen Wiederholungsanforderungsberichts oder auf der Basis einer vorhergehenden Transportblocksendung an den gleichen Zielidentifizierer identifiziert wird;
Senden der ersten Sidelink-Steuerinformationen, der zweiten Sidelink-Steuerinformationen und der physikalischen Sidelink-Steuerkanalsendung in allen konfigurierten potentiellen Sendestrahlen über eine Broadcast-Sendung; und
Senden der zweiten Sidelink-Steuerinformationen und der physikalischen Sidelink-Steuerkanalsendung in einem Strahl über eine Unicast-Sendung.

10. Senderendgerät (200) nach Anspruch 1, ferner umfassend einen Prozessor (202), angeordnet zum Zuordnen von mehreren physikalischen Sidelink-Rückmeldekanalressourcen entsprechend verschiedenen Strahlen, auf denen ein physikalischer Sidelink-Kanal gesendet wird.

11. Senderendgerät (200) nach Anspruch 1, ferner umfassend einen Prozessor (202), angeordnet zum Zuordnen einer einzelnen Ressource für einen physikalischen Sidelink-Rückmeldekanal, der die hybride automatische Wiederholungsanforderungsrückkopplung von allen Strahlen zusammenfasst, die einen physikalischen Sidelink-Kanal senden.

12. Senderendgerät (200) nach Anspruch 1, wobei der Sender (210) ferner zum Senden der Vielzahl von Referenzsignalen mit Wiederholung angeordnet ist, wobei die Vielzahl von Referenzsignalen mit dem gleichen Raumbereich-Sendefilter gesendet wird.

13. Senderendgerät (200) nach Anspruch 1, wobei die Standardreferenzsignalkonfiguration einen festen Anschluss, einen Codeteilungs-Multiplextyp, eine Dichte innerhalb eines Ressourcenblocks, eine Dichte innerhalb eines Teilkanals, eine feste Zahl von Frequenzressourcen, eine feste Zahl von Zeitsymbolen, eine feste Periodizität oder eine Kombination hiervon umfasst und die Standardreferenzsignalkonfiguration pro Ressourcenpool oder pro Sidelink-Bandbreitenteil ausgebildet ist.

## Revendications

1. Équipement utilisateur émetteur (200) pour communication par liaison latérale, l'équipement utilisateur émetteur (200) comprenant :
un émetteur (210) agencé pour transmettre, à un équipement utilisateur récepteur, des informations indiquant une pluralité de signaux de référence, dans lesquelles les informations indiquent en outre une pluralité de faisceaux, une pluralité de panneaux, ou une combinaison de ceux-ci ;
l'émetteur (210) étant en outre agencé pour transmettre une signalisation de commande de première couche indiquant des informations d'utilisateur cible et une ressource de fréquence temporelle et de décalage de créneau temporel pour une création de rapport de rétroaction de mesure de faisceau pour un ensemble de dispositifs d'équipement utilisateur dans le cadre d'une acquisition de faisceau initiale;
dans lequel la transmission des informations indiquant la pluralité de signaux de référence comprend la transmission de la pluralité de signaux de référence dans le cadre de l'acquisition de faisceau initiale avec un message de demande de découverte de couche supérieure.

2. Équipement utilisateur émetteur (200) de la revendication 1, comprenant en outre un processeur (202) agencé pour configurer une ressource de demande de planification distincte pour demander des ressources de liaison latérale à un dispositif réseau pour la transmission d'un signal de référence d'informations d'état de canal autonome.

3. Équipement utilisateur émetteur (200) de la revendication 2, comprenant en outre un récepteur (212) agencé pour recevoir des informations de commande de liaison descendante indiquant une ressource de liaison latérale pour la transmission de la pluralité de signaux de référence.

4. Équipement utilisateur émetteur (200) de la revendication 1, comprenant en outre un processeur (202) agencé pour configurer une ressource de rétroaction dédiée pour chaque ressource de signal de référence d'informations d'état de canal avec un créneau correspondant désactivé pour la réception de rétroaction, dans lequel la rétroaction transportée par la ressource de rétroaction dédiée comprend une mesure de rétroaction de puissance reçue de signal de référence de première couche pour une ressource de signal de référence d'informations d'état de canal correspondante provenant d'un équipement utilisateur récepteur.

5. Équipement utilisateur émetteur (200) de la revendication 1, dans lequel l'émetteur (210) est en outre agencé pour transmettre des informations de configuration pour une table d'états d'indicateurs de configuration de transmission dédiée, à l'équipement utilisateur récepteur, via une signalisation de commande de ressource radio.

6. Équipement utilisateur émetteur (200) de la revendication 5, comprenant en outre un processeur (202) agencé pour indiquer un état d'indicateur de configuration de transmission ou un type de diffusion dans des premières informations de commande de liaison latérale, dans lequel les premières informations de commande de liaison latérale indiquent un filtre spatial de réception, un faisceau de réception, ou une combinaison de ceux-ci, à utiliser pour des secondes informations de commande de liaison latérale et une réception de canal partagé de liaison latérale physique.

7. Équipement utilisateur émetteur (200) de la revendication 5, comprenant en outre un processeur (202) agencé pour sélectionner la table d'états d'indicateurs de configuration de transmission dédiée à partir d'au moins une table d'états d'indicateurs de configuration de transmission configurée, à l'aide d'un indicateur de type de diffusion.

8. Équipement utilisateur émetteur (200) de la revendication 1, dans lequel l'émetteur (210) est en outre agencé pour transmettre des informations de configuration pour une table d'états d'indicateurs de configuration de transmission dédiée à un équipement utilisateur récepteur via un élément de commande d'accès au support ou un identifiant de destination.

9. Équipement utilisateur émetteur (200) de la revendication 1, dans lequel l'émetteur (210) est en outre agencé pour :
transmettre, via une transmission par balayage de faisceau, des premières informations de commande de liaison latérale dans toutes les directions, informant les équipements utilisateurs concernant une occupation de ressources ;
transmettre, via une transmission de diffusion de groupe, des secondes informations de commande de liaison latérale et une transmission de canal partagé de liaison latérale physique dans un sous-ensemble de faisceaux, dans lequel le sous-ensemble de faisceaux est identifié sur la base de la réception d'un rapport de demande de répétition automatique hybride dédié ou sur la base d'une transmission de bloc de transport précédente vers le même identifiant de destination ;
transmettre, via une transmission de diffusion générale, les premières informations de commande de liaison latérale, les secondes informations de commande de liaison latérale et la transmission de canal de commande de liaison latérale physique dans tous les faisceaux de transmission potentiels configurés ; et
transmettre, via une transmission de monodiffusion, les secondes informations de commande de liaison latérale et la transmission de canal de commande de liaison latérale physique dans un seul faisceau.

10. Équipement utilisateur émetteur (200) de la revendication 1, comprenant en outre un processeur (202) agencé pour allouer de multiples ressources de canal de rétroaction de liaison latérale physique correspondant à différents faisceaux sur lesquels un canal de liaison latérale physique est transmis.

11. Équipement utilisateur émetteur (200) de la revendication 1, comprenant en outre un processeur (202) agencé pour allouer une seule ressource pour un canal de rétroaction de liaison latérale physique qui agrège les rétroactions de demande de répétition automatique hybride provenant de tous les faisceaux transmettant un canal de liaison latérale physique.

12. Équipement utilisateur émetteur (200) de la revendication 1, dans lequel l'émetteur (210) est en outre agencé pour transmettre la pluralité de signaux de référence de manière répétée, dans lequel la pluralité de signaux de référence est transmise avec le même filtre de transmission de domaine spatial.

13. Équipement utilisateur émetteur (200) de la revendication 1, dans lequel la configuration de signal de référence par défaut comprend un port fixe, un type de multiplexage par répartition en code, une densité au sein d'un bloc de ressources, une densité au sein d'un sous-canal, un nombre fixe de ressources de fréquence, un nombre fixe de symboles temporels, une périodicité fixe, ou une combinaison de ceux-ci, et la configuration de signal de référence par défaut est configurée par pool de ressources ou par partie de bande passante de liaison latérale.
